# EUROPÄISCHE PATENTSCHRIFT

(11) **EP 1 642 769 B1**
(45) Veröffentlichungstag und Bekanntmachung des Hinweises auf die Patenterteilung: **23.01.2008**
(21) Anmeldenummer: 05107509.1
(22) Anmeldetag: 16.08.2005
(51) Int. Cl.: B60Q 1/48, B62D 15/02, G08G 1/16

(54) **Verfahren zur Ausgabe von Einparkhinweisen**
Procedure for outputting parking indications
Procédé de délivrance des indications de stationnement

(30) Priorität: 30.09.2004 DE 102004047484
(43) Veröffentlichungstag der Anmeldung: 05.04.2006
(73) Patentinhaber: ROBERT BOSCH GMBH, 70442 Stuttgart (DE)
(72) Erfinder: Danz, Christian, 70469 Stuttgart (DE); Schmid, Dirk, 75397 Simmozheim (DE); Lehner, Philipp, 75417 Muehlacker (DE); Schaaf, Gunther, 70806 Kornwestheim (DE)

(56) Entgegenhaltungen:
- WO-A-20/04007232
- DE-A1- 19 922 173
- US-A1- 2003 045 973
- US-A1- 2004 119 610

## Beschreibung

### Stand der Technik

Die Erfindung geht aus von einem Verfahren zur Ausgabe von Einparkhinweisen nach der Gattung des Hauptanspruchs. Es sind schon Systeme zur Einparkunterstützung bekannt, die die Abstände zu Hindernissen in der Fahrzeugumgebung messen und den Fahrer vor einer Kollision mit diesen Hindernissen warnen. Ferner ist z.B. aus der DE 38 13 083 eine Einparkunterstützung bekannt, die dem Fahrer Anweisungen zum Einparken ausgibt. Folgt der Fahrer diesen Anweisungen, so parkt er sein Fahrzeug in eine zuvor vermessene Parklücke ein. Ein Einparkvorgang verlangt vom Fahrer einerseits, das Lenkrad zum Einschlagen der Lenkung zu betätigen, und andererseits, das Fahrzeug durch Beschleunigen vorwärts bzw. rückwärts zu bewegen. Gegebenenfalls wird das Fahrzeug auch an einer dafür vorgesehenen Stelle gestoppt, um einen Richtungswechsel durch einen Lenkradeinschlag oder durch eine geänderte Gangwahl vornehmen zu können. Die Anweisungen sind dabei im allgemeinen so vorgesehen, dass der Fahrer, während er lenkt, nicht fahren soll, so dass also bei einem Lenkvorgang das Fahrzeug steht, während bei einer Fahrt im allgemeinen nicht zusätzlich noch der Lenkwinkel verändert werden soll. Insbesondere eindeutige Lenkpositionen werden dadurch erreicht, dass der Fahrer angewiesen wird, jeweils im Stand einen Vollausschlag der Lenkung vorzunehmen. Der Fahrer wird somit dazu angeleitet, einer Einparktrajektorie zu folgen, die aus graden Stücken oder gegebenenfalls aus möglichst engen Kreisbögen zusammengesetzt ist. Wird das Fahren und das Lenken getrennt, können unterschiedliche Eigenschaften der Fahrer hinsichtlich ihrer Reaktionszeit ausgeschlossen werden, da die einzelnen Aktionen unabhängig von der Bediengeschwindigkeit durch den Fahrer durchzuführen sind.

Aus der DE 199 22 173 A1 ist eine automatische Lenkvorrichtung für ein Fahrzeug bekannt, bei dem ein automatischer Lenksteuervorgang dann gestartet wird, wenn vor Beginn des Einparkvorgangs die Differenz zwischen dem Istlenkwinkel der Räder und einem Anfangswert für den automatischen Lenkvorgang weniger als 180° beträgt. Ist die Abweichung vor dem Einparkvorgang derart groß, wird ein Benutzer aufgefordert, einen Standardlenkwinkel einzustellen, so dass ausgehend von diesem Standardlenkwinkel nunmehr wieder eine automatische Steuerung des richtigen Einparklenkwinkels vorgenommen werden kann, um eine Soll-Ortsbewegung des Fahrzeugs herbeizuführen.

### Vorteile der Erfindung

Das erfindungsgemäße Verfahren zur Ausgabe von Einparkhinweisen mit den Merkmalen des Hauptanspruchs hat demgegenüber den Vorteil, dass zunächst eine Lenkanweisung zum Einschlagen der Lenkung an den Fahrer ausgegeben wird, jedoch erst nach einem Zurücklegen einer vorgegebenen Wegstrecke überprüft wird, ob nun ein vorgegebener Einschlagswinkel eingestellt worden ist. Dies lässt dem Fahrer die Gelegenheit, den Lenkeinschlag auch während der Fahrt vorzunehmen. Hierdurch wird ein Lenken im Stand vermieden. Ferner kann der Benutzer innerhalb eines gewissen Toleranzbereichs auch in seiner ihm eigenen Lenkgeschwindigkeit das Lenkrad einschlagen. Er muss sich nicht auf eine vorgegebene Lenkgeschwindigkeit festlegen. Hierdurch wird das Lenken insbesondere während der Fahrt erleichtert. Kann während der Fahrt gelenkt werden, so ist ein niedrigeres Drehmoment für die Betätigung der Lenkung aufzuwenden, da die Lenkung bei einem Rollen des Fahrzeugs leichtgängiger ist, als bei einem stehenden Fahrzeug. Insgesamt ist der Einparkvorgang für den Fahrer angenehmer, da er mehr dem üblichen Einparkvorgang ohne Unterstützung entspricht, bei dem Lenken und Fahren im allgemeinen miteinander verbunden werden. Durch den flüssigeren Ablauf kann zudem die für den Einparkvorgang benötigte Zeit verringert werden. Hierdurch wird die Fahrbahn, die durch den Einparkvorgang möglicherweise zumindest teilweise blockiert wird, schneller wieder für den nachfolgenden Verkehr geräumt. Mittels der vorgegebenen Wegstrecke wird somit eine Umlenkzone definiert, innerhalb der der Fahrer eine notwendige Lenkänderung vornehmen kann. Indem am Ende der Umlenkzone dennoch kontrolliert wird, ob ein Umlenken erfolgt ist, kann für den Fall, dass der Fahrer nicht hinreichend das Lenkrad betätigt hat, noch eine Korrektur vorgenommen werden. Selbst für den Fall, dass der Fahrer nicht zutreffend gehandelt hat, ist zu diesem Zeitpunkt im allgemeinen noch eine Korrektur derart möglich, dass der Einparkvorgang fortgeführt und erfolgreich beendet werden kann.

Durch die in den Unteransprüchen aufgeführten Maßnahmen sind vorteilhafte Weiterbildungen und Verbesserungen des im Hauptanspruch angegebenen Verfahrens zur Ausgabe von Einparkhinweisen möglich. Insbesondere ist es vorteilhaft, für den Fall, dass eine Korrektur erforderlich ist, den Fahrer nunmehr zu einem Vollausschlag der Lenkung anzuregen, da am Ende der durch die vorgegebene Wegstrecke definierten Umlenkzone der dem Fahrer zur Verfiigung stehende Spielraum zumindest weitgehend ausgeschöpft ist.

Ferner ist es vorteilhaft, vor der Ausgabe der Korrekturanweisung, insbesondere aber bei der Ausgabe der Lenkanweisung zum Einschlagen eine Reaktionszeit des Fahrers zu berücksichtigen. Bei einem Fahrer, der sehr schnell einlenkt, sollte die Ausgabe eines Hinweises zum Einlenken verhältnismäßig spät erfolgen, da sonst die Lenkung möglicherweise durch den Fahrer zu stark eingeschlagen wird. Reagiert ein Fahrer auf eine Anweisung im allgemeinen jedoch relativ langsam, so sollte die Anweisung möglichst frühzeitig ausgegeben werden. Hierdurch wird vermieden, dass bei einer zu späten Ausgabe der Fahrer aufgrund seiner langsameren Reaktion den gewünschten Lenkradeinschlag nicht schnell genug einstellt.

Die Reaktionszeit des Fahrers kann einerseits aus der Befolgung der Anweisungen selbst gewonnen werden. Andererseits ist es jedoch auch möglich, die Reaktionszeit des Fahrers anhand anderer im Fahrzeug vorhandener Systeme zu bestimmen. Damit ist eine individuelle Anpassung an das jeweilige Fahrerverhalten möglich.

### Zeichnung

Ausführungsbeispiele der Erfindung sind in der Zeichnung dargestellt und in der nachfolgenden Beschreibung näher erläutert. Es zeigen
Figur 1 schematisch ein Fahrzeug mit einer Vorrichtung zur Durchführung des erfindungsgemäßen Verfahrens,
Figur 2 einen Einparkvorgang unter Ausnutzung des erfindungsgemäßen Verfahrens,
Figur 3 einen Ablauf des erfindungsgemäßen Verfahrens,
Figur 4 eine Detaildarstellung eines Verfahrensschritts des erfindungsgemäßen Verfahrens gemäß der Figur 3.

### Beschreibung des Ausführungsbeispiels

Die vorliegende Erfindung ist insbesondere für Kraftfahrzeuge anwendbar, die in Längsparklücken einparken, die seitlich zu einem Straßenverlauf angeordnet sind. Insbesondere bei solchen Längsparklücken ist es erforderlich, dass zunächst ein erster Einschlag und im Anschluss ein Gegenlenken erfolgt. Die Abstimmung dieser beiden Umlenkpunkte machen es für Fahrer besonders schwierig, in solche Parklücken hineinzustoßen. Das erfindungsgemäße Verfahren ist für ein Einparken eines Fahrzeugs in beliebige Parklücken anwendbar. Da die Unterstützung jedoch bei den genannten seitlichen Parklücken besonders gewünscht ist, wird die Erfindung im Folgenden am Beispiel eines solchen Einparkvorgangs eines Kraftfahrzeugs in eine Längsparklücke erläutert.

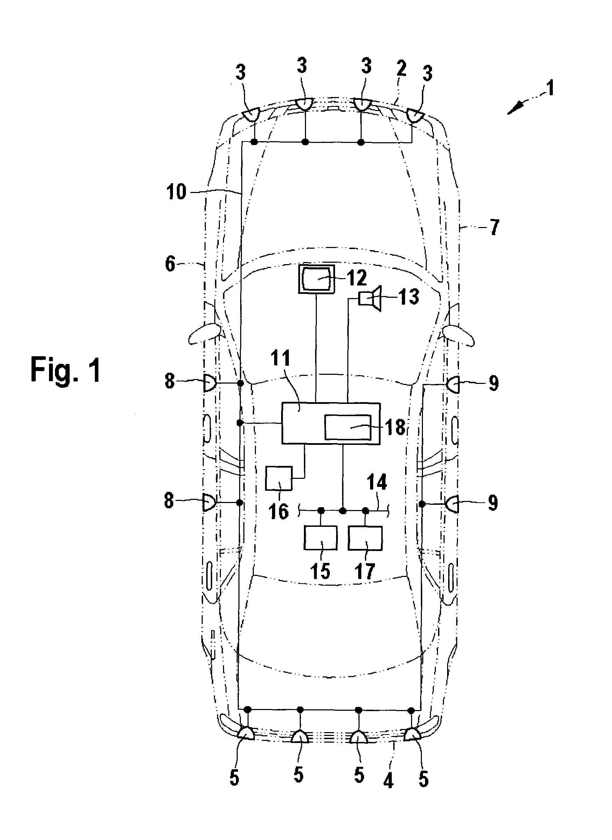

In der Figur 1 ist ein Kraftfahrzeug 1 schematisch dargestellt. An einer Fahrzeugvorderseite 2 sind Abstandssensoren 3 angeordnet. An einer Fahrzeugrückseite 4 sind ebenfalls Abstandssensoren 5 angeordnet. An einer linken Fahrzeugseite 6 und an einer rechten Fahrzeugseite 7 sind jeweils ebenfalls Sensoren 8, 9 vorgesehen. Die Abstandssensoren messen Abstände zu Hindernissen in der Fahrzeugumgebung. Die Abstandssensoren 3, 5, 8, 9 sind insbesondere als Ultraschallsensoren ausgeführt. Sie können jedoch auch auf einem anderen Messprinzip, z.B. auf optischen Signalen, den Abstand messen. Ferner sind auch Videosensoren möglich, die einen Abstand aus einer aufgenommenen Bildinformation ermitteln. Die Abstandssensoren 3, 5, 8, 9 liefern ihre Messdaten bzw. ermittelten Abstandswerte über einen Datenbus 10 an eine Auswerteeinheit 11 im Fahrzeug. Die Auswerteeinheit 11 ermittelt die Abstände zu Hindernissen in der Fahrzeugumgebung und die Lage dieser Hindernisse in der Fahrzeugumgebung. Dies geschieht insbesondere dadurch, dass die Messdaten der einzelnen Sensoren miteinander verbunden ausgewertet werden. Die Auswerteeinheit 11 kann die Sensoren auch in verschiedenen Messmodi betreiben, so dass z.B. die Geschwindigkeit einer Signalaussendung an die jeweilige Fahrzeuggeschwindigkeit angepasst wird. Somit können die Messbedingungen zwischen einem Vermessen einer Parklücke bei einem Vorbeifahren an der Parklücke und bei einem im allgemeinen langsamer durchgeführten Einparkvorgang angepasst werden. Aus den Abstandswerten kann die Auswerteeinheit 11 somit eine Umgebungskarte des Fahrzeugs bestimmen. Ferner ist die Auswerteeinheit 11 dazu ausgelegt, eine geeignete Parklücke zu ermitteln und einen Weg in diese Parklücke zu bestimmen. Ferner bestimmt sie bevorzugt auch Ausgaben an den Fahrer. Für die Ausgabe ist die Auswerteeinheit 11 mit einer Anzeige 12 verbunden. Ferner sind auch akustische Ausgaben über einen Lautsprecher 13 möglich. Die Anzeige 12 ist insbesondere als ein Bildschirm einer Navigationsanzeige in dem Fahrzeug ausgeführt. Ferner können Anweisungen auch über eine Anzeige in einem Kombinationsinstrument, über ein Head-Up-Display oder über LED-Anzeigen, die zusätzlich an der Armaturentafel zu montieren sind, ausgegeben werden. Um eine Bewegung des Fahrzeugs zu ermitteln, ist die Auswerteeinheit 11 bevorzugt über einen Datenbus 14, der insbesondere als ein CAN-Bus ausgeführt ist, mit einem Wegstreckensensor 15 verbunden. In einer bevorzugten Ausführungsform ist der Wegstreckensensor 15 als ein Raddrehzahlsensor ausgeführt, der eine Radbewegung des Fahrzeugs misst. Wird eine Radbewegung detektiert, so wird anhand der Raddrehung und dem Radumfang eine von dem Fahrzeug zurückgelegte Strecke bestimmt. Um auch die Richtung der Fahrt ermitteln zu können, ist die Auswerteeinheit 11 ferner mit einem Lenkwinkelsensor 16 verbunden, mittels dem die aktuelle Lenkrichtung des Fahrzeugs ausgewertet werden können. Eine Fahrtrichtung vorwärts oder rückwärts wird insbesondere aus einer Ganghebelstellung bzw. aus einer Einstellung eines Getriebes 17 ermittelt.

In einer bevorzugten Ausführungsform ist die Auswerteeinheit 11 dazu ausgelegt, auch die Reaktionszeit des Fahrers zu bestimmen. Sie vergleicht unter Ausnutzung des Lenkwinkelsensors 16 insbesondere, wie schnell der Fahrer einer über die Anzeige 12 oder den Lautsprecher 13 ausgegebenen Lenkanweisung folgt. Bevorzugt kann sie damit Fahrer in verschiedene Kategorien unterteilen, z.B. langsam, normal und schnell. Ferner kann jedoch auch eine Reaktionszeit als Zeitinformation ermittelt werden. Ergänzend kann die Auswerteeinheit 11 zur Bestimmung der Reaktionszeit über den Datenbus 14 auch auf andere Fahrzeugsysteme, z.B. ein ACC (Adaptive Cruise Control)-System zugreifen, die nicht zur Lenkung gehören.

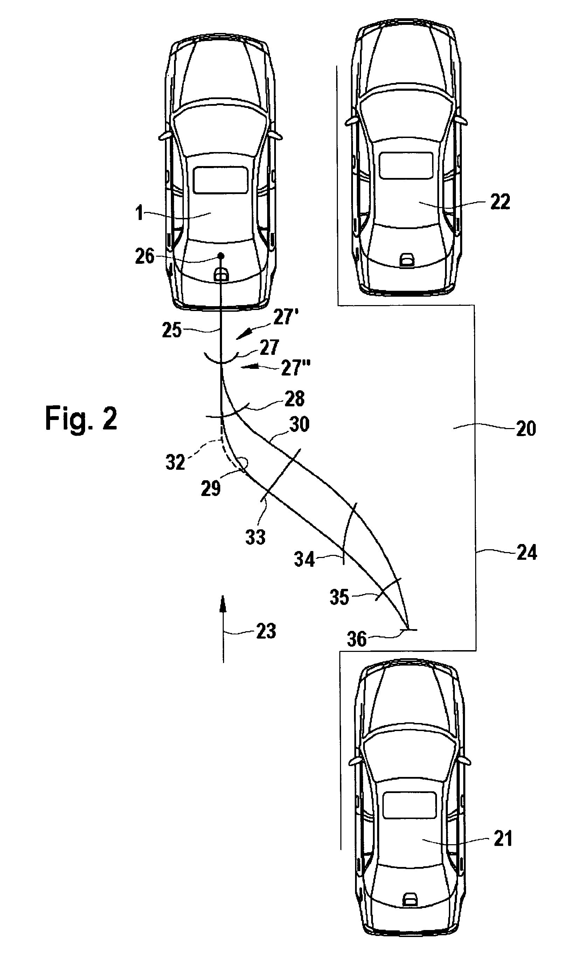

Anhand der Figur 2 ist die Durchführung eines erfindungsgemäßen Verfahrens dargestellt. Das Fahrzeug 1 weist die in der Figur 1 erläuterten Einrichtungen zur Durchführung des erfindungsgemäßen Verfahrens auf. Das Fahrzeug 1 soll in eine Parklücke 20 einparken, die zwischen einem ersten Fahrzeug 21 und einem zweiten Fahrzeug 22 liegt. Das Fahrzeug 1 ist zuvor an dem ersten Fahrzeug 21, der Parklücke 20 und dem zweiten Fahrzeug 22 in Pfeilrichtung 23 vorbeigefahren, wobei die an der rechten Fahrzeugseite 7 angeordneten Sensoren 9 den Abstand zu den Fahrzeugen 21, 22 vermessen haben. Dabei hat sich herausgestellt, dass zwischen den Fahrzeugen 21, 22 die Parklücke 20 frei ist, in die das Fahrzeug 1 einparken kann. Eine von den Sensoren 9 ermittelte Abstandslinie 24 gibt die Abmaße an, die von den Sensoren bei der Vorbeifahrt ermittelt wurden. Die Auswerteeinheit 11 bestimmt über eine ihr zugeordnete Recheneinheit den Weg von der aktuellen Position des Fahrzeugs 1 in die Parklücke 20. Aus der Abstandsmessung, in Verbindung mit der Messung der zurückgelegten Wegstrecke mittels des Wegstreckensensors 15 ist die Auswerteeinheit 11 dabei bekannt, welche Position das Fahrzeug 1 gegenüber den übrigen Fahrzeugen 21, 22 und insbesondere gegenüber der Parklücke 20 einnimmt. Daher kann die Auswerteeinheit 11 eine Trajektorie ausgehend von der aktuellen Position des Fahrzeugs 1 berechnen, die in die Parklücke 20 führt. Eine derartige Trajektorie 25 ist hinsichtlich eines gewählten Referenzpunktes, hier des Mittelpunktes der Hinterachse des Fahrzeugs, in der Figur 2 dargestellt. Die Ausgangsposition 26 des so gewählten Referenzpunktes ist in der Figur 2 hervorgehoben dargestellt. Ausgehend von der Ausgangsposition 26 des Fahrzeugs 1 muss der Fahrer zunächst ein kurzes Stück zurücksetzen, ohne einzuschlagen. An der ersten Position 27 wird einem Fahrer ausgegeben, nun nach rechts, also in Richtung der Parklücke 20, einzuschlagen. Die Auswerteeinheit 11 hat zudem eine Wegstrecke vorberechnet, innerhalb der ein vorgegebener Einschlag der Lenkung vorgenommen sein muss. Diese Wegstrecke endet an der zweiten Position 28. An der zweiten Position 28 wird überprüft, ob eine Lenkung zu stark erfolgt ist bzw. ob eine Lenkung nicht hinreichend durchgeführt wurde.

In der Figur 2 ist eine erste Variante 29 einer Trajektorie und eine zweite Variante 30 einer Trajektorie dargestellt. Bei der zweiten Trajektorie 30 ist ein Vollausschlag der Lenkung nach Ausgabe des Hinweises an der ersten Position 27 erfolgt. Ein weiterer Einschlag wäre nicht möglich gewesen. Bei der ersten Trajektorie 29 ist ein Einschlag noch derart erfolgt, dass der Fahrer ohne einen weiteren zusätzlichen Eingriff weiterfahren kann, um die Parklücke 20 zu erreichen. Hat der Fahrer jedoch nicht weit genug eingeschlagen, z.B. entsprechend einer dritten Trajektorie 32, so wird er an der zweiten Position 28 dazu aufgefordert, nunmehr stehen zu bleiben und einen Vollausschlag vorzunehmen. Mit diesem und gegebenenfalls weiteren Hinweisen wird er auf die erste Trajektorie 29 zurückgeführt. Für jede Trajektorie, die zwischen der zweiten Trajektorie 30 und der ersten Trajektorie 29 liegt, ist damit an der zweiten Position 28 kein weiterer Eingriff erforderlich. Zwischen der ersten Trajektorie 29 und der dritten Trajektorie 32 muss der Fahrer jedoch anhalten und gegebenenfalls einen Vollausschlag der Lenkung vornehmen, um einen zuvor berechneten bereich zulässiger Trajektorien wieder zu erreichen. Hat der Fahrer das Lenkrad gegebenenfalls sogar in die falsche Richtung gedreht und befindet er sich ausgehend von der ersten Trajektorie 29 noch außerhalb der dritten Trajektorie 32, so ist eine Korrektur zu diesem Zeitpunkt nicht mehr möglich, so dass der Fahrer zunächst dazu angewiesen wird, in die ursprüngliche Ausgangsposition 26 zumindest in etwa zurückzufahren und ausgehend von dieser Position den Einparkvorgang neu zu starten. Die erste Position 27 und die zweite Position 28 beschreiben damit eine Umlenkzone, innerhalb der der Fahrer sowohl lenken, als auch zugleich fahren kann, um die Parklücke 20 zu erreichen.

An den weiteren Umlenkbereichen bzw. Unlenkpunkten ist ebenfalls eine entsprechende Ausgabe von Fahrhinweisen möglich. Dies ist insbesondere ein Bereich für Gegenlenken, dessen vordere und hintere Begrenzung mit dem Bezugszeichen 33 und 34 versehen sind. Auch ein Geradeziehen kurz vor Erreichen der endgültigen Parkposition in der Parklücke 20 erfordert gegebenenfalls noch ein Gegenlenken des Fahrers, so dass ein entsprechender Bereich mit dem Bezugszeichen 35 und 36 versehen ist.

Zu Beginn der Umlenkzone für das Gegenlenken an der Position 33 wird dem Fahrer ausgegeben, nun in die Gegenrichtung einzuschlagen. An der zweiten Position 34 wird überprüft, ob ein Gegenlenken hinreichend erfolgt ist. Hierzu wird an der zweiten Position 34 überprüft, ob wenigstens ein Lenkwinkel in einem vorgegebenen Lenkwinkelbereich eingestellt wurde. Insbesondere kann hier, da nunmehr verschiedene Trajektorien vorliegen, die Wegstrecke, nach der ausgehend von der ersten Position der korrekt eingestellte Lenkwinkel überprüft wird, auch von der bisher gefahrenen Trajektorie abhängen.

In weiteren Ausführungsformen kann die Überprüfung des Lenkwinkels auch lediglich für ein erstes Einschlagen des Fahrzeugs durchgeführt werden, da bei den übrigen Umlenkmaßnahmen das Fahrzeug bereits relativ weit in der Parklücke enthalten ist. So kann an der zweiten Position 28 in erfindungsgemäßer Weise das Einlenken überprüft werden, während für ein anschließendes Gegenlenken der Fahrer stets anhalten muss, um einen Vollausschlag der Lenkung vorzunehmen. Denn zu dem Zeitpunkt, an dem der Fahrer gegenlenken muss, befindet sich das Fahrzeug bereits weitgehend in der Parktasche. Wenn das Fahrzeug nun anhält, kann es den nachfolgenden Verkehr nicht mehr behindern.

Um eine gute Position in der Parklücke zu gewährleisten und um insbesondere ein fehlertolerantes System zu erhalten, kann während des Einparkvorgangs in Abhängigkeit von der aktuellen Position des Fahrzeugs eine Neuberechnung der Einparktrajektorie durchgeführt werden. Stehen genügend Ressourcen zur Berechnung zur Verfiigung, kann während des gesamten Einparkvorgangs eine Neuberechnung der Parktrajektorie durchgeführt werden. Ferner bietet es sich an, eine Neuberechnung unter Berücksichtigung aktuell erfasster Abstandswerte dann durchzuführen, wenn ein Ende einer Umlenkzone, also z.B. die Positionen 28, 34 oder 36 erreicht worden ist.

In einer bevorzugten Ausführungsform werden die Grenzen der Umlenkzonen in Abhängigkeit von der Reaktionszeit des Fahrers festgelegt. Denn die Zeit, innerhalb der ein Fahrer eine ausgegebene Fahranweisung befolgt, z.B. eine Anweisung, an der ersten Position 27 nach rechts zu lenken, ist für verschiedene Fahrer möglicherweise unterschiedlich. Während ein vorsichtiger Fahrer vielleicht sehr zügig lenkt, aber langsam fährt, so ist es möglicherweise der Stil eines anderen Fahrers, sehr langsam zu lenken, dabei jedoch relativ zügig in die Parklücke einstoßen zu wollen.

Reagiert ein Fahrer relativ langsam, so kann die erste Position 27 in Richtung der Ausgangsposition 26 verlagert werden. Damit wird sichergestellt, dass der Fahrer bei der zweiten Position 28 bereits einen gewünschten Lenkwinkel erreicht hat. Reagiert ein Fahrer jedoch sehr zügig, so kann die erste Position 27, an der die Anweisung ausgegeben wird, von der Ausgangsposition 26 sogar noch weiter weg vorgesehen werden. Bei einem langsamen Fahrer erfolgt die Ausgabe z.B. vor Erreichen der ersten Position 27 bereits an der Position 27'. Bei einem schnell reagierenden Fahrer erfolgt die Ausgabe des Lenkhinweises erst an der Position 27".

Lenkt ein Fahrer zu schnell, ist es besonders an denjenigen Positionen vorteilhaft, ihm möglichst spät die Anweisung zu geben, an denen er ansonsten beispielsweise durch einen zügigen Vollausschlag der Lenkung eine vorgegebene Trajektorie verlässt und eine entsprechende Korrektur erforderlich wird. In jedem Falle soll so erreicht werden, dass der Fahrer bei Erreichen der zweiten Position 28 einen gewünschten Lenkwinkel eingestellt hat. Reagiert ein Fahrer besonders langsam, müssen ihm auch die Hinweise zur Korrektur, also die Hinweise zur Durchführung eines Vollausschlags zur Korrektur, rechtzeitig ausgegeben werden.

Die Positionen, an denen eine Ausgabe erfolgen soll, können somit anhand der von dem Fahrer vorgenommenen Bedienungen und der damit bestimmten Reaktionszeit festgelegt werden. Bevorzugt wird die Reaktionszeit des Fahrers ermittelt und bei den weiteren Ausgaben entsprechend berücksichtigt. Insgesamt kann hierdurch die angestrebte Parkposition des Fahrzeugs leichter ermittelt werden. In einer ersten Ausführungsform wird die Reaktionszeit für einen Fahrer über einen längeren Zeitraum gemittelt. In einer weiteren Ausführungsform kann jedoch auch für jeden Parkvorgang einer Reaktionszeit des Fahrers ermittelt werden, so dass zumindest für die nachfolgenden Umlenkzonen ein richtiger Hinweis ausgegeben wird. Möglicherweise ist die Reaktionsgeschwindigkeit auch von der aktuellen Fahrzeugsituation abhängig, wobei z.B. nachfolgender Verkehr dazu führen kann, dass der Fahrer versucht besonders zügig in die Parklücke einzuparken. Die Reaktionszeit kann damit durch die Auswertung der folgenden Fragen ermittelt werden:
Wie schnell reagiert der Fahrer auf eine Anweisung, z.B. Anhalten oder Lenken?
Mit welcher Geschwindigkeit lenkt der Fahrer?
Mit welcher Geschwindigkeit fährt der Fahrer? Aus der Geschwindigkeit kann ermittelt werden, welche Strecke das Fahrzeug innerhalb der Reaktionszeit des Fahrers zurücklegen wird.
Zur Beantwortung dieser Fragen werden insbesondere die Lenkbewegung, der gefahrene Weg bzw. auch eine Betätigung des Bremspedals zur Feststellung, wann das Fahrzeug angehalten wird, ausgewertet werden. Einerseits ist es möglich anhand der somit ermittelten Werte konkrete Positionen für die Ausgabe der Anweisungen zu bestimmen.

In einer weiteren Ausführungsform kann auch eine Klassifizierung der Reaktionszeiten erfolgen, wobei in diesem Fall bestimmte Wertebereiche vorzusehen sind, nach denen ein Fahrer z.B. als langsam, normal schnell oder schnell eingestuft wird. Die Ausgabe von Hinweisen kann nun an diese Klassifizierung angepasst werden, indem für jede Klassifizierung bestimmte Abstände zu einem Ausgabepunkt für einen durchschnittlichen Fahrer berücksichtigt werden. Welche Werte hierbei vorzusehen sind, sind bevorzugt in einem Speicher 18 der Auswerteeinheit 11 abgelegt. In dem Speicher 18 sind ferner auch die Fahrzeugabmaße zur Berechnung einer Einparktrajektorie abgelegt.

Neben der Bestimmung der Reaktionszeit aus den Lenkbewegungen des Fahrers kann die Reaktionszeit des Fahrers auch anhand von anderen Fahrzeugsystemen bestimmt werden. Hierbei ist zu berücksichtigen, dass die Reaktionszeit nicht nur z.B. vom Alter oder dem persönlichen Fahrstil abhängt, sondern auch in Abhängigkeit von der aktuellen physischen Verfassung, z.B. Müdigkeit, zu verschiedenen Zeiten stark schwanken kann. Um bereits vor dem Beginn des Einparkvorgangs Informationen über die Reaktionszeit des Fahrers zur Verfiigung zu haben, können beliebige andere Fahrzeugsysteme zur Reaktionszeitbestimmung ausgewertet werden. Z.B. können Aufmerksamkeitstests vorgenommen werden, wie z.B. eine Vibration am Lenkrad und Detektion einer Fahrerreaktion, z.B. in Form eines Gegenlenkens. Ein solcher Aufmerksamkeitstest kann z.B. über eine Schnittstelle zwischen einer elektronischen Steuerung (EPS) und der Auswerteeinheit 11 vorgenommen werden. Ferner ist auch als Schnittstelle ein Spurhaltesystem (LKS, Lane Keeping Support) möglich. In einer weiteren Ausführungsform kann die Reaktionszeit auch aus einer Reaktionszeit bei einem Befolgen einer Übernahmeaufforderung eines ACC-Systems (Adaptive Cruise Control) ermittelt werden. Wird der Fahrer aufgefordert, nach der automatischen Geschwindigkeitsregelung wieder selbst zu übernehmen, kann die Reaktionszeit aus der Zeitdifferenz zwischen der Aufforderung und der tatsächlichen Übernahme durch den Fahrer, die z.B. anhand der Betätigung des Gaspedals erfassbar ist, ermittelt werden. Ferner ist es auch möglich, ein Videosystem zur Verkehrszeichenerkennung dahingehend auszuwerten, dass eine Zeitdifferenz zwischen einem Grünschalten einer Ampel und einem Loslassen des Bremspedals bzw. einer Betätigung des Gaspedals erfasst wird.

Ferner ist es möglich, die Zeit zwischen einer Anzeige, dass eine geeignete Parklücke vorliegt, und dem Einleiten eines Bremsvorgangs durch den Fahrer ermittelt werden. Mit diesem Bremsvorgang hält der Fahrer das Fahrzeug 1 auf der Ausgangsposition 26 an, um anschließend in die Parklücke hineinzufahren. Für diese einzelnen Systeme kann eine Reaktionszeit jeweils als Zahlenwert ermittelt werden, der anschließend in die Berechnung der Positionen einfließt. Ferner ist es auch möglich, auch hier zwischen einem langsamen, schnellen bzw. normalen Fahrer zu unterscheiden und die Klassifizierung anhand von in dem Speicher 18 abgelegten Vergleichswerten vorzunehmen. Ein Schätzwert für die Reaktion des Fahrers kann dabei ständig aktualisiert werden. Die Reaktionszeit kann auch für beliebige andere Fahrzeugsysteme zur Verfügung gestellt werden.

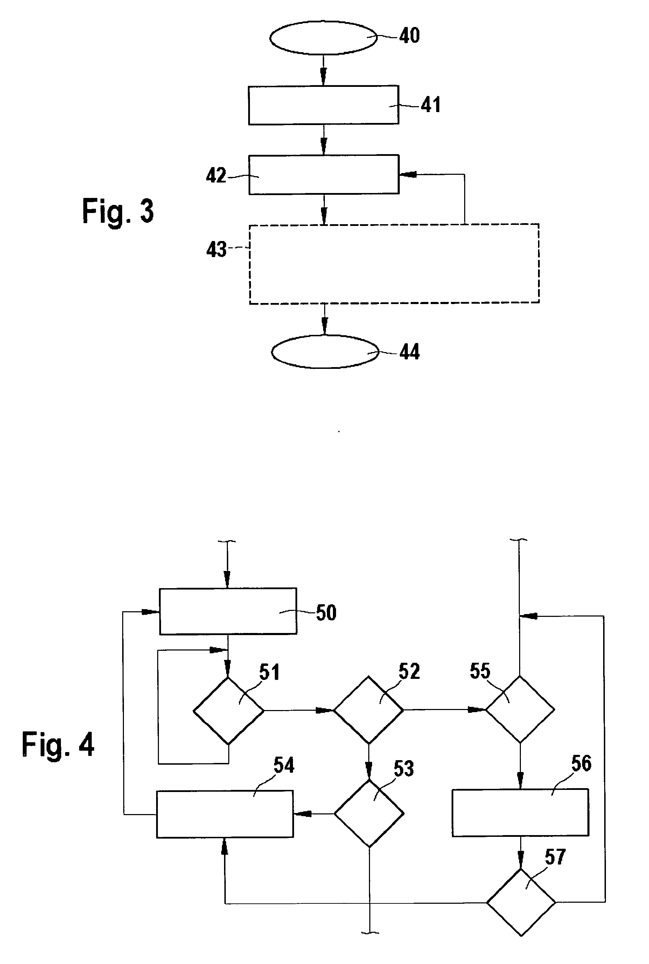

Ein erfindungsgemäßer Verfahrensablauf ist anhand der Figuren 3 und 4 dargestellt. In einem Initialisierungsschritt 40 startet der Fahrer den Einparkvorgang, indem er den Wunsch eingibt, in eine Parklücke einzuparken. Hieran schließt sich ein Messschritt 41 an, in dem eine geeignete Parklücke ermittelt und vermessen wird. In einem anschließenden Berechnungsschritt 42 wird eine Trajektorie zum Einparken in die Parklücke bestimmt. Der anschließende Einparkschritt 43 ist in der Figur 4 im Detail erläutert. Von dem Einparkschritt 43 wird entweder für eine Neuberechnung der Einparktrajektorie zu dem Berechnungsschritt 42 zurückverzweigt oder die gewünschte Parklücke wird erreicht, so dass das Fahrzeug in der Parklücke abgestellt werden kann und das erfindungsgemäße Verfahren in einem Endschritt 44 beendet werden kann. In dem Berechnungsschritt 42 werden zudem, bevorzugt unter Berücksichtigung der Reaktionszeiten, die Positionen an der Trajektorie bzw. an den Trajektorienverläufen, ermittelt, an denen Lenkanweisungen bzw. gegebenenfalls Korrekturanweisungen ausgegeben werden.

Der Einparkschritt 43 ist in der Figur 4 detailliert dargestellt. Ausgehend von dem Berechnungsschritt 42 wird zunächst in einem ersten Ausgabeschritt 50 eine Fahranweisung an den Benutzer ausgegeben. Ausgehend von der in der Figur 2 dargestellten Situation ist dies zunächst der Hinweis, das Fahrzeug gerade zurückzufahren. In einem anschließenden, ersten Prüfschritt 51 wird überprüft, ob sich das Fahrzeug noch in einem Wegeintervall befindet, für das die in dem ersten Ausgabeschritt 50 ausgegebene Fahranweisung zutreffend ist. Ist dies der Fall, so wird zu dem ersten Prüfschritt 51 zurückverzweigt und der Wegstreckensensor 15 wird erneut abgefragt, um festzustellen, ob sich das Fahrzeug immer noch innerhalb dieses Intervalls befindet. Wird das Intervall verlassen, so wird von dem ersten Prüfschritt 51 zu einem zweiten Prüfschritt 52 verzweigt. Dies ist bei dem Ausführungsbeispiel gemäß der Figur 2 dann der Fall, wenn die erste Position 27 erreicht wird.

In dem zweiten Prüfschritt 52 wird überprüft, ob sich das Fahrzeug noch innerhalb eines zulässigen Bereichs der Trajektorie befindet. Ist der Fahrer anhand des Ausführungsbeispiels gemäß der Figur 2 ausgehend von der Ausgangsposition 26 zu der ersten Position 27 gerade zurückgefahren, so ist dies z.B. der Fall. Wird festgestellt, dass die Position des Fahrzeugs zulässig ist, so wird zu einem dritten Prüfschritt 53 verzweigt. In dem dritten Prüfschritt wird überprüft, ob die endgültige Parkposition erreicht worden ist. Falls dies so ist, so wird zu dem Endschritt 44 verzweigt. Falls dies nicht so ist, so wird zu einem Bestimmungsschritt 54 verzweigt, in dem eine neue Fahranweisung bestimmt wird. Anschließend wird zu dem ersten Ausgabeschritt 50 verzweigt, in dem diese Fahranweisung über die Ausgabeeinheiten 12, 13 an den Fahrer ausgegeben werden. An der zweiten Position 28 wird der zweite Prüfschritt 52 erneut erreicht. Befindet sich das Fahrzeug auf der ersten Trajektorie 29, auf der zweiten Trajektorie 30 oder in dem Bereich dazwischen mit einem entsprechend eingestellten Lenkwinkel, so wird zu dem dritten Prüfschritt 53 verzweigt. Befindet sich dagegen das Fahrzeug außerhalb der beiden Grenztrajektorien 29 und 30, so wird zu einem vierten Prüfschritt 55 verzweigt. In dem vierten Prüfschritt 55 wird überprüft, ob das Fahrzeug noch ausgehend von der aktuellen Position in die Parklücke 20 eingeparkt werden kann. Ist der Fahrer soweit von der Anweisung abgewichen, dass ein Einparken auf der zuvor berechneten Trajektorie nicht mehr möglich ist, so wird ausgehend von dem vierten Prüfschritt 55 zu dem Berechnungsschritt 42 zurückverzweigt, ausgehend von dem eine neue Einparkstrecke in die Parklücke 20 berechnet wird. Gegebenenfalls kann dies bedeuten, dass der Fahrer zunächst das Fahrzeug wieder vorsetzen muss, um beispielsweise die Ausgangsposition 26 erneut zu erreichen. Ist jedoch ausgehend von dem vierten Prüfschritt eine Korrektur möglich, so wird von dem vierten Prüfschritt 55 zu einem Korrekturausgabeschritt 56 verzweigt. In dem Korrekturausgabeschritt wird ein Fahrer z.B. aufgefordert, das Fahrzeug zunächst zu stoppen und anschließend einen Vollausschlag der Lenkung durchzuführen. Befindet sich der Fahrer innerhalb des Bereichs der Trajektorien 29 und 32, so wird ein entsprechender Korrekturausgabeschritt an ihn ausgegeben. Nachdem die Korrektur ausgegeben worden ist, wird in einem anschließenden fünften Prüfschritt 57 überprüft, ob der Fahrer die Korrektur durchgeführt hat. Ist dies der Fall, wird zu dem Bestimmungsschritt 54 für die Ausgabe verzweigt, in dem die nächste, der Trajektorie entsprechende Fahranweisung bestimmt wird, so dass sie anschließend an den Fahrer ausgegeben werden kann. Hat der Fahrer nicht korrigiert, so wird ebenfalls zu dem Berechnungsschritt 42 zur Neuberechnung zurückverzweigt.

Ein Kompromiss zwischen einer Genauigkeit der Endposition und einem möglichst schnellen Verlassen der Fahrbahn kann z.B. dadurch erreicht werden, indem nur der erste Anhaltepunkt zu einer Umlenkzone aufgeweitet wird. An dem zweiten Anhaltepunkt zum Gegenlenken muss der Fahrer jedoch anhalten. An diesem Punkt ist ohnehin die Fahrgeschwindigkeit schon relativ gering, so dass das bei der ortsfesten Durchführung des Volleinschlags erforderliche Anhalten des Fahrzeugs nicht als Behinderung empfunden wird.

## Patentansprüche

1. Verfahren zur Ausgabe von Einparkhinweisen an einen Fahrer eines Fahrzeugs (1), wobei eine Lenkanweisung zum Einschlagen der Lenkung ausgegeben wird, **dadurch gekennzeichnet, dass** nach einer vorgegebenen Wegstrecke nach Ausgabe der Lenkanweisung eine Korrekturanweisung während der Fahrt, dann ausgegeben wird, wenn an einem Ende der vorgegebenen Wegstrecke nicht wenigstens ein vorgegebener Einschlagswinkel der Lenkung eingestellt worden ist.

2. Verfahren nach Anspruch 1, **dadurch gekennzeichnet, dass** die Korrekturanweisung eine Anweisung zum Anhalten und zur Vornahme eines Volleinschlags umfasst.

3. Verfahren nach einem der vorherigen Ansprüche, **dadurch gekennzeichnet, dass** für den Zeitpunkt der Ausgabe der Lenkanweisung zum Einschlagen und/oder der Korrekturanweisung eine Reaktionszeit des Fahrers berücksichtigt wird.

4. Verfahren nach Anspruch 3, **dadurch gekennzeichnet, dass** die Reaktionszeit aus der Zeit bestimmt wird, innerhalb der ein Fahrer ausgegebenen Lenkanweisungen gefolgt ist.

5. Verfahren nach Anspruch 3, **dadurch gekennzeichnet, dass** eine Reaktionszeit des Fahrers aus einer Bedienung von nicht zur Lenkung gehörenden Fahrzeugsystemen ermittelt wird.

6. Vorrichtung zur Unterstützung eines Einparkvorgangs nach einem Verfahren gemäß einem der vorherigen Ansprüche, mit einer Umfelderfassungseinheit (3, 5, 8, 9) zur Ermittlung einer Parkposition, mit einer Ausgabeeinheit (12, 13) zur Ausgabe von Lenkanweisungen und von Korrekturanweisungen zum Einschlagen der Lenkung durch den Fahrer während der Fahrt, mit einem Lenkwinkelsensor (16) zur Ermittlung des aktuellen Lenkwinkels und mit einem Wegstreckensensor (15) zur Bestimmung der zurückgelegten Wegstrecke.

## Claims

1. Method for outputting parking instructions to a driver of a vehicle (1), wherein a steering instruction to lock the steering system is output, **characterized in that** after a predefined distance after the steering instruction has been output a correction instruction is output during travel if at least a predefined lock angle of the steering has not been set at an end of the predefined distance.

2. Method according to Claim 1, **characterized in that** the correction instruction comprises an instruction to maintain and to perform a full steering lock.

3. Method according to one of the preceding claims, **characterized in that** a reaction time of the driver is taken into account for the time of the outputting of the steering instruction to lock the steering and/or the outputting of the correction instruction.

4. Method according to Claim 3, **characterized in that** the reaction time is determined from the time within which a driver has followed steering instructions which have been output.

5. Method according to Claim 3, **characterized in that** the a reaction time of the driver is determined from operation of vehicle systems which are not associated with the steering.

6. Device for assisting a parking process in accordance with a method according to one of the preceding claims, having a surroundings-sensing unit (3, 5, 8, 9) for determining a parking position, having an outputting unit (12, 13) for outputting steering instructions and correction instructions for the steering system to be locked by the driver during travel, having a steering angle sensor (16) for determining the current steering angle and having a distance sensor (15) for determining the distance travelled.

## Revendications

1. Procédé d'émission d'indications de stationnement destinées à un conducteur de véhicule (1), selon lequel on émet une indication de guidage pour braquer la direction,
**caractérisé en ce qu'**
après un trajet prédéfini suivant l'émission de l'indication de guidage, on émet pendant le déplacement, une indication de correction si à la fin du trajet prédéfini au moins un angle de braquage prédéfini de la direction n'a pas été réalisé.

2. Procédé selon la revendication 1,
**caractérisé en ce que**
l'indication de correction contient une indication pour s'arrêter et pour effectuer un braquage complet.

3. Procédé selon l'une des revendications précédentes,
**caractérisé en ce qu'**
à l'instant de l'émission de l'indication de guidage pour braquer et/ou l'indication de correction, on tient compte du temps de réaction du conducteur.

4. Procédé selon la revendication 3,
**caractérisé en ce qu'**
on détermine le temps de réaction à partir du temps nécessaire au conducteur à répondre aux indications de guidage émises.

5. Procédé selon la revendication 3,
**caractérisé en ce qu'**
on détermine le temps de réaction du conducteur à partir de la manoeuvre de systèmes du véhicule ne faisant pas partie de la direction.

6. Dispositif d'assistance à une manoeuvre de stationnement selon le procédé de l'une des revendications précédentes, comprenant une unité de saisie de l'environnement (3, 5, 8, 9) pour déterminer une position de stationnement, une unité d'émission (12, 13) pour émettre des indications de guidage et des indications de correction pour braquer la direction par le conducteur en cours de déplacement, un capteur d'angle de braquage (16) pour déterminer l'angle de braquage actuel et un capteur de trajet (15) pour déterminer le trajet parcouru.
